# EUROPEAN PATENT SPECIFICATION

(11) **EP 3 386 786 B1**
(45) Date of publication and mention of the grant of the patent: **27.09.2023**
(21) Application number: 16820096.2
(22) Date of filing: 09.12.2016
(51) Int. Cl.: B60H 1/32, B60H 1/00

(54) **AIR CONDITIONING SYSTEM FOR USE IN VEHICLE**
KLIMAANLAGE ZUR VERWENDUNG IN EINEM FAHRZEUG
DISPOSITIF DE CLIMATISATION DESTINÉ À ÊTRE UTILISÉ DANS UN VÉHICULE

(30) Priority: 10.12.2015 US 201514965115; 10.12.2015 US 201514965142
(43) Date of publication of application: 17.10.2018
(73) Proprietor: Bergstrom, Inc., Rockford, IL 61125-6007 (US)
(72) Inventor: CONNELL, Brett, S., Winnebago, IL 61088 (US); HERRMANN, Brett, J., Rochelle, IL 61068 (US); ZEIGLER, Terry, Byron, IL 61010 (US)
(74) Representative: Eisenführ Speiser
(86) International application number: PCT/US2016/065812
(87) International publication number: WO 2017/100561

(56) References cited:
- WO-A1-2014/209780
- DE-A1- 19 745 028
- DE-A1- 19 917 811
- JP-A- H02 128 915
- US-A1- 2001 015 070
- US-A1- 2007 131 408
- US-A1- 2009 211 280
- US-B1- 6 543 245

## Description

### FIELD OF THE INVENTION

The present invention generally relates to vehicle air conditioning systems, including, but not limited to, over-the-road and off-road vehicle air conditioning systems that can prevent undesired collection of refrigerant in one or more evaporators.

### BACKGROUND

In response to the needs of the transportation industry and the regulations governing the amount of time that a driver may spend behind the wheel, many vehicles include a cab compartment and a sleeper compartment where the driver or passenger can rest. To create a comfortable environment for drivers and passengers, vehicle heating, ventilation, and air conditioning (HVAC) systems have been developed to provide conditioned air to the cab and sleeper compartments.

US patent US 6543245B1 discloses a system and a method to maintain multiple temperatures using a single refrigeration system. Such a refrigeration system includes a compressor, reservoir, condenser and associated piping is selectively coupled to one of a plurality of evaporator units. Each evaporator unit has an inlet valve, an expansion valve and an evaporator. A sensor signals a microprocessor that one of the plurality of evaporators requires cooling, initiating a cooling cycle. The compressor is energized and the evaporator inlet valve opens, allowing refrigerant to flow through the evaporator unit. At the conclusion of the cooling cycle, the evaporator inlet valve closes while the compressor continues to operate allowing the removal or drawing down of the refrigerant from the evaporator prior to cooling another evaporator section. At the conclusion of the draw down process, the compressor is de-energized.

Such vehicle HVAC systems may include multiple evaporators, one for each compartment. For example, a system may include a cab evaporator (e.g., an evaporator associated with the cab compartment to cool the cab compartment) and a sleeper evaporator (e.g., an evaporator associated with the sleeper compartment to cool the sleeper compartment). Such systems may also include multiple compressors connected to different power sources so that the vehicle HVAC systems can be operated when the engine of the vehicle is on and when it is off.

To meet a specific cooling demand and reduce waste of compressed and condensed refrigerant, the systems may be operated to allow the compressed and condensed refrigerant to pass through one or more of the evaporators while restricting the condensed refrigerant from passing through other evaporator(s). For example, in a case where cooling in the sleeper compartment is not desired (e.g., the sleeper compartment is not occupied), the systems may be operated to restrict the refrigerant from passing through the sleeper evaporator to reduce waste of the compressed and condensed refrigerant on an unoccupied compartment. Similarly, in a case where cooling in the cab compartment is not desired, the systems may be operated to restrict the refrigerant from passing through the cab compartment.

While restricting the refrigerant from passing through the non-operating evaporator or evaporators (e.g., the sleeper evaporator when cooling in the sleeper compartment is not desired or the cab evaporator where cooling in the cab compartment is not desired), conventional systems cannot prevent the collection or accumulation of the refrigerant in the non-operating evaporator(s), in particular at the lower pressure side of the non-operating evaporator(s). The collection or accumulation of the refrigerant in the non-operating evaporator(s) reduces the effective amount of the refrigerant that should be used to cool the compartment(s) in need of cooling, making it difficult to meet (in some circumstances, only partially meet) the cooling demand. Consequently, the cooling capacity and overall efficiency of the HVAC systems are reduced, and the operational costs are increased.

Given the above background, there is a need in the art for air conditioning systems with enhanced cooling efficiency and capacity that provide conditioned air to multiple compartments and that prevent undesired collection of refrigerant in non-operating evaporators.

The information disclosed in this Background section is provided for an understanding of the general background of the invention and is not an acknowledgement or suggestion that this information forms part of the prior art already known to a person skilled in the art.

### SUMMARY

Various aspects of the present invention provide air conditioning systems with enhanced cooling efficiency and capacity that provide conditioned air to multiple compartments and that prevent the undesired collection of refrigerant in non-operating evaporators.

The present invention, as defined in claim 1, provides an air *conditioning* system for use in a vehicle having two or more compartments. The air conditioning system includes at least two compressors, a condenser disposed downstream of the at least two compressors, a plurality of evaporators disposed downstream of the condenser, a plurality of shut-off valves, refrigerant lines, a first sensor and a controller. The refrigerant lines fluidly connect the at least two compressors, the condenser, and the plurality of evaporators to form a refrigerant circuit for circulating the refrigerant.

The plurality of evaporators includes a first evaporator and a second evaporator fluidly coupled to each other in parallel. When implemented in the vehicle, the first evaporator is in thermal communication with a first compartment of the vehicle to cool the first compartment and the second evaporator is in thermal communication with a second compartment of the vehicle to cool the second compartment. The plurality of shut-off valves includes a first shut-off valve and a second shut-off valve. The first shut-off valve is installed at a refrigerant inlet of the first evaporator and the second shut-off valve is installed at a refrigerant outlet of the first evaporator. The first and second shut-off valves are controlled to prevent refrigerant from collecting in the first evaporator. In some embodiments, the first and second shut-off valves are controlled to prevent refrigerant from collecting in the first evaporator when airflow over or through the first evaporator is less than a first predetermined volume.

The air conditioning system further includes a first sensor and a controller electrically coupled to the first sensor and the first and second shot-off valves. The first sensor is configured to perform one or more of the following: (i) measure temperature of the first evaporator and (ii) measure airflow passing over the first evaporator. The controller is configured to control the operation of the first and second shut-off valves in accordance with the measured temperature or the measured airflow or both. The controller is configured to automatically close the first and second shut-off valves when the measured temperature of the first evaporator is lower than a first predetermined temperature, or when the measured airflow passing over the first evaporator is less than a first predetermined volume, and to automatically open the first and second shut-off valves when the measured temperature of the first evaporator exceeds the first predetermined temperature, or when the measured airflow passing over the first evaporator is equal to or greater than the first predetermined volume. In an embodiment not covered by the subject-matter of the claims, the method includes manually and selectively opening or closing the first and second shut-off valves in accordance with temperature of the first evaporator or airflow passing over the first evaporator.

The plurality of evaporators includes a first evaporator and a second evaporator fluidly coupled to each other in parallel. The plurality of shut-off valves includes a first shut-off valve and a second shut-off valve. The first shut-off valve is installed at a refrigerant inlet of the first evaporator and the second shut-off valve is installed at a refrigerant outlet of the first evaporator. The first sensor is configured to perform one or more of the following: (i) measure temperature of the first evaporator and (ii) measure airflow passing over the first evaporator. The controller is electrically coupled to the first sensor and configured to control the operation of the first and second shut-off valves in accordance with the measured temperature or the measured airflow or both. The controller is configured to automatically close the first and second shut-off valves when the measured temperature of the first evaporator is lower than a first predetermined temperature, or when the measured airflow passing over the first evaporator is less than a first predetermined volume, and to automatically open the first and second shut-off valves when the measured temperature of the first evaporator exceeds the first predetermined temperature, or when the measured airflow passing over the first evaporator is equal to or greater than the first predetermined volume.

In an embodiment, the plurality of shut-off valves includes a third shut-off valve and a fourth shut-off valve. The third shut-off valve is installed at a refrigerant inlet of the second evaporator and the fourth shut-off valve is installed at a refrigerant outlet of the second evaporator to prevent refrigerant from collecting in the second evaporator. In some embodiments, the third shut-off valve and the fourth shut-off valve are controlled to prevent refrigerant from collecting in the second evaporator when airflow over the second evaporator is less than a second predetermined volume. In some embodiments, the system includes a second sensor configured to perform one or more of the following: (iii) measure temperature of the second evaporator and (iv) measure airflow passing over the second evaporator. In some embodiments, the controller is electrically coupled to the second sensor and configured to control the operation of the third and fourth shut-off valves in accordance with the measured temperature and the measured airflow. In some embodiments, the controller is configured to automatically close the third and fourth shut-off valves when the measured temperature of the second evaporator is lower than a second predetermined temperature, or when the measured airflow passing over the second evaporator is less than a second predetermined volume, and to automatically open the third and fourth shut-off valves when the measured temperature of the second evaporator exceeds the second predetermined temperature, or when the measured airflow passing over the second evaporator is equal to or greater than the second predetermined volume.

The systems of the present invention have other features and advantages that will be apparent from or are set forth in more detail in the accompanying drawings, which are incorporated herein, and the following Detailed Description, which together serve to explain certain principles of the present invention.

### BRIEF DESCRIPTION OF THE DRAWINGS

The accompanying drawings, which are incorporated into and constitute a part of this specification, illustrate one or more embodiments of the present application and, together with the detailed description, serve to explain the principles and implementations of the application.
FIG. 1 is a block diagram illustrating a first exemplary air conditioning system.
FIG. 2 is a block diagram illustrating a second exemplary air conditioning system in an embodiment not covered by the subject-matter of the claims,.
FIG. 3 is a block diagram illustrating a third exemplary air conditioning system.
FIG. 4 is a block diagram illustrating a fourth exemplary air conditioning system.
FIG. 5 is a schematic diagram illustrating an implementation of an air conditioning system in a vehicle.
FIG. 6 is a schematic diagram illustrating an alternative implementation of an air conditioning system in a vehicle.
FIG. 7 is a schematic diagram illustrating another alternative implementation of an air conditioning system in a vehicle.

### DETAILED DESCRIPTION

Reference will now be made in detail to implementations of the present application as illustrated in the accompanying drawings. The same reference indicators will be used throughout the drawings and the following detailed description to refer to the same or like parts.
Other embodiments of the present invention according to the subject-matter of the claims will readily suggest themselves to such skilled persons having benefit of this disclosure.

In the interest of clarity, not all of the routine features of the implementations described herein are shown and described.

Embodiments of the present invention are described in the context of air conditioning systems for use in vehicles, and in particular, in the context of air conditioning systems to cool different compartments or different spaces of an over-the-road or off-road vehicle. The vehicle can be a car, a van, a truck, a bus, a trailer, or other automobiles.

An air conditioning system of the present invention includes a plurality of compressors, a condenser, a plurality of evaporators and refrigerant lines. The refrigerant lines fluidly connect the compressors, condenser and evaporators to form a refrigerant circuit. The air conditioning system of the present invention also includes a plurality of shut-off valves disposed at the refrigerant circuit to prevent undesired collection of refrigerant in one or more of the evaporators, and thus enhance the cooling effect or capacity of the HVAC systems. The air conditioning system of the present invention includes a controller electrically coupled to the shut-off valves to control the operation of the valves. The controller is electrically coupled to other components of the air conditioning system (e.g., a compressor or a condenser or both) to control operation of these components.

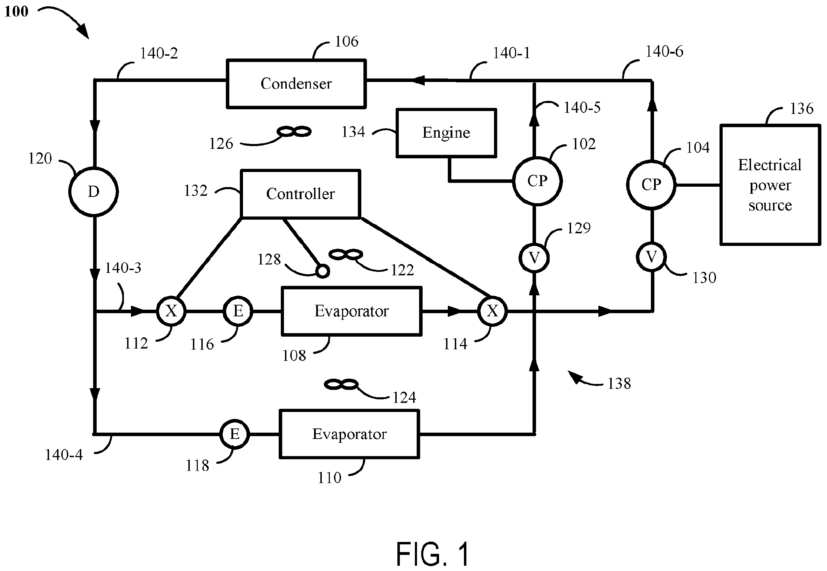

By way of illustration, FIG. 1 depicts an air conditioning system (100) including a first compressor (102), a second compressor (104), a condenser (106), a first evaporator (108), a second evaporator (110), a first shut-off valve (112) and a second shut-off valve (114). The first and second compressors, the condenser, the first and second evaporators, and the first and second valves are fluidly connected by refrigerant lines (104-1, 104-2, etc.) to form a refrigerant circuit (138).

In the illustrated embodiment, the first and second compressors (102, 104) are fluidly connected to each other in parallel by refrigerant lines (140-5, 140-6) and are configured for compressing a refrigerant. The first compressor (102) is configured to connect to an internal combustion engine of the vehicle and is driven through a belt and pulley system by the internal combustion engine when the internal combustion engine is running. The second compressor (104) is configured to operate when the internal combustion engine (134) of the vehicle is not running, for example, by connecting to an electrical power source (136) such as a battery. With the first and second compressors (102, 104) in place, the air conditioning system of the present invention can be operated when the engine is on as well as when the engine is off. In some embodiments, the first and second compressors (102, 104) are belt-driven compressors, electrically-driven compressors, or any other suitable compressors.

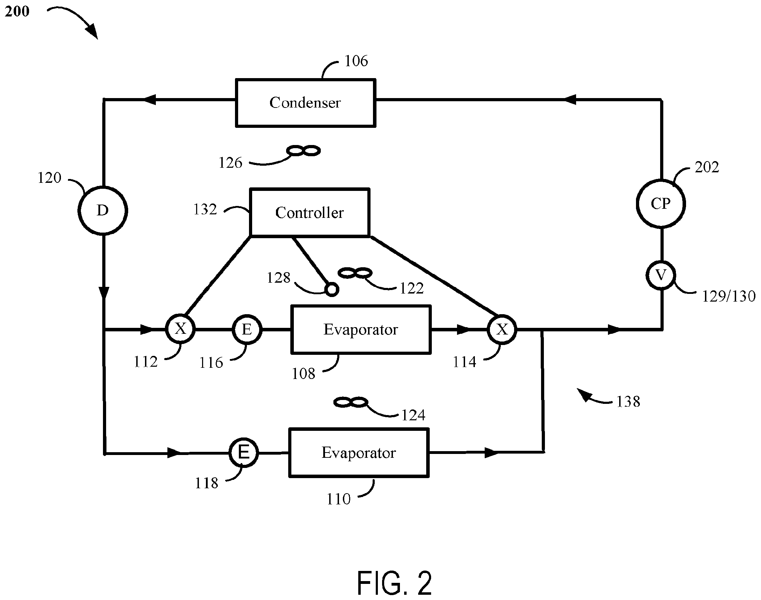

In some embodiments not covered by the subject-matter of the claims, an air conditioning system of the present invention has one compressor. For example, as illustrated in FIG. 2, in an embodiment not covered by the subject-matter of the claims, the air conditioning system (200) of the present invention has one compressor (202). The compressor (202) can be a compressor driven by the engine (e.g., the same as or similar to the first compressor 102 in FIG. 1) or driven by a battery or other power sources (e.g., the second compressor 104 in FIG. 1).

Turning back to FIG. 1, the condenser (106) is disposed downstream of the first and second compressors (102, 104) and fluidly connected to the first and second compressors (102, 104) by a refrigerant line (140-1). The condenser (106) is configured to condense the refrigerant compressed by the first or second compressor or both. As used herein, the term "downstream" refers to a position along a refrigerant line in the direction of the refrigerant flow. As used herein, the term "upstream" refers to a position along a refrigerant line opposite to the direction of the refrigerant flow. For example, FIG. 1 illustrates the condenser (106) disposed downstream of the first and second compressors (102, 104) and upstream of the evaporator (108), where the directions of the refrigerant flow are indicated by the arrows.

The first and second evaporators (108, 110) are disposed downstream of the condenser (106) and fluidly connected to the condenser (106) by a refrigerant line (140-2). The first and second evaporators (108, 110) are fluidly coupled to each other in parallel via refrigerant lines (140-3, 140-4) and configured to evaporate the condensed refrigerant. The first shut-off valve (112) is installed at the refrigerant inlet of the first evaporator (108), and the second shut-off valve (114) is installed at the refrigerant out of the first evaporator (108).

As used herein, the term "refrigerant inlet" refers to an inlet of a corresponding evaporator and a portion of a refrigerant line upstream of the corresponding evaporator. As used herein, the term "refrigerant outlet" refers to an outlet of a corresponding evaporator and a portion of a refrigerant line downstream of the corresponding evaporator. For example, refrigerant inlet of the first evaporator refers to the inlet of the first evaporator (108) and a portion of the refrigerant line (140-3) upstream of the first evaporator (108). Refrigerant outlet of the first evaporator (108) refers to the outlet of the first evaporator (108) and a portion of the refrigerant line (140-3) downstream of the first evaporator (108).

The first evaporator (108) is in thermal communication with a first compartment and the second evaporator (110) is in thermal communication with a second compartment to cool the first and second compartments. As used herein, the term "in thermal communication" refers to one or more of the following: (i) the respective evaporator is mounted within a corresponding compartment to exchange heat with that compartment or with the air in that compartment, and (ii) the respective evaporator is coupled with a device (e.g., heat exchanger or air blower) which introduces conditioned air into that compartment.

In some embodiments, the first evaporator (108) is mounted in the first compartment and the second evaporator (110) is mounted in the second compartment. In some embodiments, the first compartment can be separated from the second compartment, for example, by a wall or other barrier such as a curtain. In some embodiments, the first compartment and the second compartment are different areas within the same space. In some embodiments, the first compartment is a cab compartment, a sleeper compartment, or any other compartment in a vehicle.

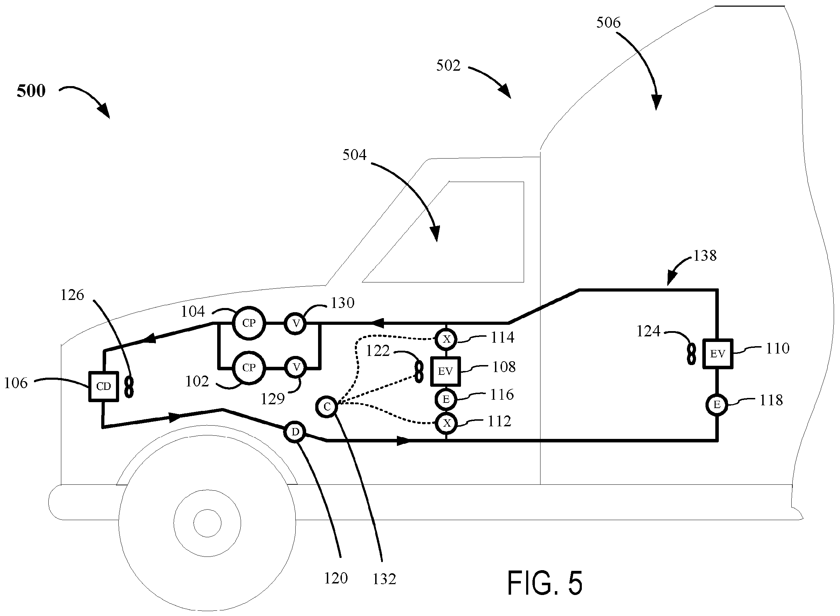

As an example, FIG. 5 illustrates an implementation of the air conditioning system (100) in a vehicle (502). The vehicle (502) has a cab compartment (504) where an operator or driver operates the vehicle and a sleeper compartment (506) where the operator or driver can rest. In the illustrated embodiment, first evaporator (108) is in thermal communication with the cab compartment (504), while second evaporator (110) is in thermal communication with the sleeper compartment (506).

When cooling is desired in both cab and sleeper compartments, first and second shut-off valves (112, 114) are opened, either manually or automatically, so that the condensed refrigerant flows through both the first and second evaporators (108, 110) and provides cooling to both the cab and sleeper compartments. When cooling is only desired in the sleeper compartment (e.g., when the vehicle is parked and no one is in the cab compartment), the first and second shut-off valves (112, 114) are closed. Since the first and second shut-off valves (112, 114) are installed at both the refrigerant inlet and outlet of the first evaporator (108), closing the first and second shut-off valves (112, 114) prevents the refrigerant from entering the first evaporator (108) from both sides and thus prevents the refrigerant from collecting or accumulating in the first evaporator (108). As a result, the condensed refrigerant flows only through the second evaporator (110) and thus enhances the cooling effect of the second evaporator (110).

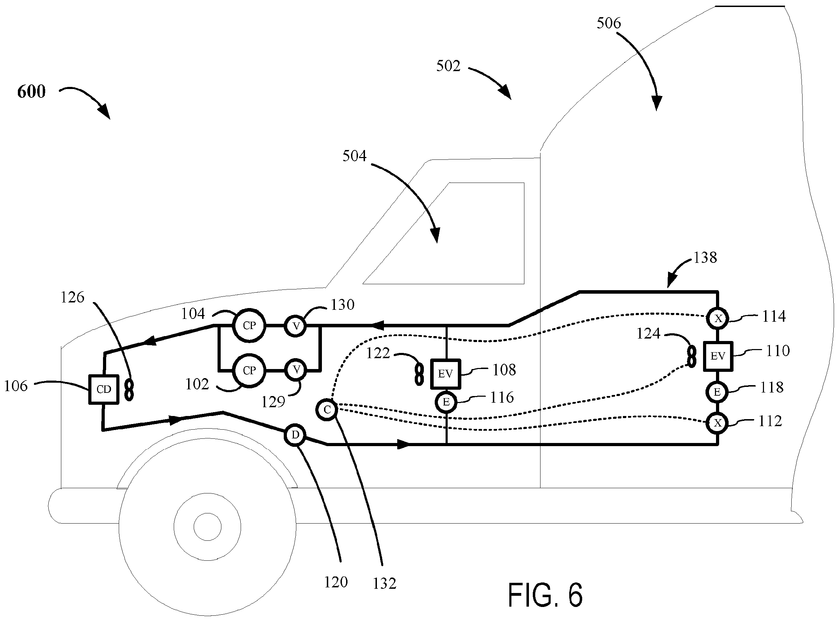

As another example, FIG. 6 illustrates an alternative implementation of the air conditioning system (100) of the present invention in the vehicle (502), where the first evaporator (108) is in thermal communication with the sleeper compartment (506) and the second evaporator (110) is in thermal communication with the cab compartment (504). In such an embodiment, when cooling is desired in both the cab and sleeper compartments, the first and second shut-off valves (112, 114) are opened, either -in an embodiment not covered by the subject-matter of the claims- manually or automatically, so that the condensed refrigerant flows through both the first and second evaporators (108, 110) and provides cooling to both cab and sleeper compartments. When cooling is only desired in the cab compartment (e.g., no one is in the sleeper compartment), the first and second shut-off valves (112, 114) are closed. Similar to the embodiment illustrated in FIG. 5, closing the first and second shut-off valves (112, 114) prevents the refrigerant from entering into the first evaporator (108) from both sides and thus prevents the refrigerant from collecting or accumulating in the first evaporator (108). As a result, the condensed refrigerant flows only through the second evaporator (110) and thus enhances the cooling effect of the second evaporator (110).

In some embodiments not covered by the subject-matter of the claims, the first and second shut-off valves are operated (e.g., opened or closed) manually, for example, by a driver of the vehicle who desires more cooling in a compartment/area or wants no cooling at all in the compartment/area. According to the invention, the first or second shut-off valve or both are operated automatically by a controller (132). Operating the first and second shut-off valves depends on other parameters or operations of other components in the air conditioning system. When airflow over the first evaporator is less than a first predetermined volume (e.g., indicating cooling is undesired in the compartment associated with the first evaporator), the first and second shut-off valves are -in embodiments not covered by the subject-matter of the claims- manually or automatically closed to prevent refrigerant from collecting in the first evaporator. The first predetermined volume can be preset or reset in accordance with the type of vehicle, compartments associated with the first evaporator, preference of the drivers/operators/passengers, ambient temperature or other parameters. In an example, the first predetermined volume is at most 0.035 cubic meter per second (75 Cubic Feet per Minute (CFM)), indicating cooling is undesired in the compartment associated with the first evaporator.

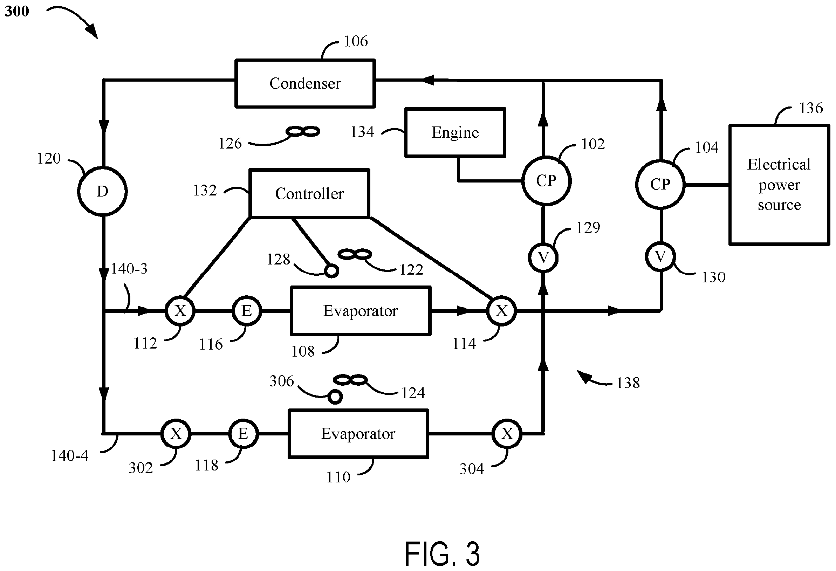

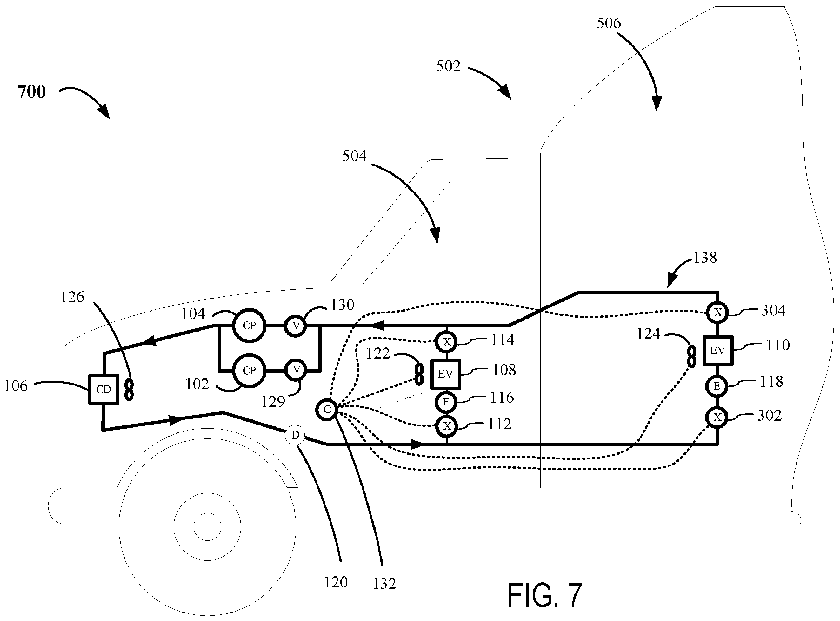

In some embodiments, an air conditioning system of the present invention includes more than two shut-off valves. As an example, FIG. 3 illustrates an air conditioning system (300) having four shut-off valves, and FIG. 7 depicts an implementation of the air conditioning system (300) in the vehicle (502). In addition to the first and second shut-off valves (112, 114), the air conditioning system (300) includes a third shut-off valve (302) and a fourth shut-off valve (304). The third and fourth shut-off valves (302, 304) are installed at the refrigerant inlet and outlet of the second evaporator (110). Like the first and second shut-off valves (112, 114), the third and fourth shut-off valves (302, 304) can be opened/closed, manually or automatically. Similar to the first and second shut-off valves (112, 114), closing the third and fourth shut-off valves (302, 304) prevents the refrigerant from entering into the second evaporator (110) from both sides and thus prevents the refrigerant from collecting or accumulating in the second evaporator (110). As a result, the condensed refrigerant flows only through the first evaporator (108) and thus enhances the cooling effect of the second evaporator (108).

Like the first and second shut-off valves (112, 114), operation of the third and fourth shut-off valves (302, 304) can depend on other parameters or operations of other components in the air conditioning system. In some embodiments, the first, second, third and fourth shut-off valves are selectively and independently controlled. For example, when airflow over the second evaporator is less than a second predetermined volume (e.g., indicating cooling is undesired in the compartment associated with the second evaporator), the third and fourth shut-off valves are manually or automatically closed to prevent refrigerant from collecting in the second evaporator. Like the first predetermined volume, the second predetermined volume can be preset or reset in accordance with the type of vehicle, compartments associated with the second evaporator, desire of drivers/operators, or other parameters. The second predetermined volume can be the same as or different from the first predetermined volume. In an example, the second predetermined volume is at most 0.035 cubic meter per second (75 Cubic Feet per Minute (CFM)), indicating cooling is undesired in the compartment associated with the second evaporator.

Turning back to FIG. 1, the air conditioning system (100) of the present invention includes a first sensor (128) and a controller (132) electrically coupled to the first sensor (128). In some embodiments, the control (132) is an intelligent power generation management controller described in U.S. Publication No. 2007/0131408 and U.S. Patent Nos. 7,591,143 and 8,453,722.

The first sensor (128) is configured to perform one or more of the following: (i) measure temperature of the first evaporator (108) and (ii) measure the airflow passing over the first evaporator (108). When the measured temperature is lower than a first predetermined temperature, or the measured airflow passing over the first evaporator (108) is less than the first predetermined volume (e.g., 0.035 cubic meter per second (75 CFM)), or both, the controller (132) automatically closes or sends instruction to close the first and second shut-off valves (112, 114). When the measured temperature exceeds the first predetermined temperature or when the measured airflow passing over the first evaporator is equal to or greater than the first predetermined volume, the controller (132) automatically opens or sends instruction to open the first and second shut-off valves (112, 114). In some embodiments, the controller (132) is electrically coupled to one or more other components in the air conditioning system. The controller (132) is electrically coupled to the first compressor (102) or the second compressor (104) or both to automatically control the operation of the compressors in accordance with ambient temperature, operation of the engine, the cooling demand of the compartments of the vehicle, or other parameters.

In some embodiments, the air conditioning system (100) of the present invention includes a plurality of control valves to selectively restrict or permit flow of the refrigerant to the compressors. As an example, FIG. 1 illustrates the air conditioning system (100) having a first flow control valve (129) and a second flow control valve (130). The first flow control valve (129) is disposed at the refrigerant line (104-5) upstream of the first compressor (102) and configured to selectively restrict or permit flow of the refrigerant to the first compressor (102). The second flow control valve (130) is disposed at the refrigerant line (104-6) upstream of the second compressor (104) and configured to selectively restrict or permit flow of the refrigerant to the second compressor (104). In some embodiments, the operation of the flow control valves is automatically controlled by the controller.

In some embodiments, the air conditioning system (100) of the present invention includes a plurality of metering devices to control flow of the refrigerant into the evaporators. As an example, FIG. 1 illustrates the air conditioning system (100) having a first metering device (116) and a second metering device (118). The first metering device (116) is disposed at the refrigerant line (104-3) between the first shut off valve (112) and the first evaporator (108) and configured for controlling flow rate of the refrigerant into the first evaporator (108). The second metering device (118) is disposed at the refrigerant line (104-4) upstream of the second evaporator (110) and configured for controlling flow rate of the refrigerant into the second evaporator (110). In some embodiments, the first and the second metering devices are thermal expansion valves. In some embodiments, the operation of the metering devices is automatically controlled by the controller.

In some embodiments, the air conditioning system (100) of the present invention includes a receiver/drier (120). The receiver/drier (120) is disposed at the refrigerant line (104-3) between the condenser (106) and the evaporators (108, 110). The receiver/drier (120) is configured to temporarily store the refrigerant, absorb moisture from the refrigerant, or both.

In some embodiments, the air conditioning system (100) of the present invention includes a plurality of air blowers to enhance the performance of some components in the air conditioning system. As an example, FIG. 1 illustrates the air conditioning system (100) having a first air blower (122), a second air blower (124) and a third air blower (126). The first air blower (122) is positioned proximate the first evaporator (108) and configured to blow air over the first evaporator (108). The air is cooled when passed over the first evaporator (108) and can be introduced into a compartment for cooling purpose. Similarly, the second air blower (124) is positioned proximate the second evaporator (110) and configured to blow air over the second evaporator (110). The air is cooled when passing the second evaporator (110) and can be introduced into another compartment or a different area of the same compartment for cooling purpose. The third air blower (126) is positioned proximate the condenser (106) and configured to blow air over the condenser (106) to cool it. When passing over the condenser (106), the air extracts the heat away from the condenser (106) and thus enhances the performance of the condenser (106).

Referring now to FIG. 3, in some embodiments, the air conditioning system (300) of the present invention includes more than one sensor for measuring airflows over the evaporators. For example, in addition to the first sensor (128), the air conditioning system (300), as illustrated, includes a second sensor (306) configured to perform one or more of the following: (iii) measure temperature of the second evaporator and (iv) measure the airflow passing over the second evaporator (116). In some embodiments, the controller (132) is electrically coupled to both the first and second sensors (128, 306) and configured to automatically control the first, second, third and fourth shut-off valves (112, 114, 302, 304) based on the measured temperatures or the measured airflows. In some embodiments, the controller (132) is configured to automatically perform or send instructions to perform one or more of the following: (i) close the first and second shut-off valves (112, 114) when the measured temperature of the first evaporator (108) is lower than a first predetermined temperature, or when the measured airflow passing over the first evaporator (108) is less than a first predetermined volume; (ii) open the first and second shut-off valves (112, 114) when the measured temperature of the first evaporator (108) exceeds the first predetermined temperature, or when the measured airflow passing over the first evaporator (108) is equal to or greater than the first predetermined volume; (iii) close the third and fourth shut-off valves (302, 304) when the measured temperature of the second evaporator (110) is lower than a second predetermined temperature, or when the measured airflow passing over the second evaporator (110) is less than a second predetermined volume; and (iv) open the third and fourth shut-off valves (302, 304) when the measured temperature of the second evaporator (110) exceeds the second predetermined temperature, or when the measured airflow passing over the second evaporator (110) is equal to or greater than the second predetermined volume. In some embodiments not covered by the subject-matter of the claims, one or more of the first, second, third and fourth shut-off valves (112, 114, 302, 304) are performed manually and selectively in accordance with the measured temperatures, airflows, or other factors.

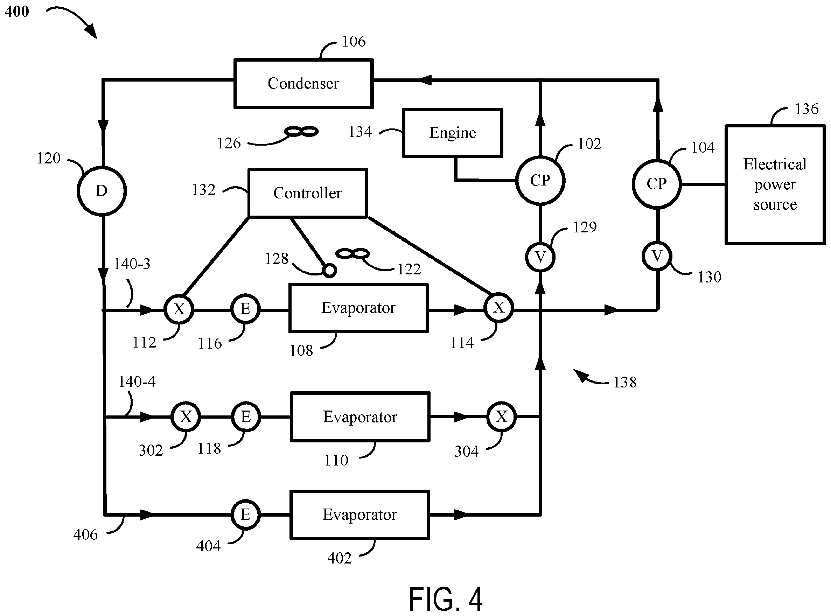

In some embodiments, an air conditioning system of the present invention includes more than two evaporators. As an example, FIG. 4 illustrates an air conditioning system (400) having three evaporators. In addition to the first and second evaporator (108, 110), the air conditioning system (400) includes a third evaporator (402). The third evaporator (402) is fluidly coupled to the first and second evaporators (108, 110) in parallel by refrigerant lines (140-3, 140-4, 406). The third evaporator (402) is in thermal communication with a third compartment. The third compartment can be a compartment separated from the first and second compartments or an area in the first or second compartment. In some embodiments, the air conditioning system (400) includes a third metering device (404) disposed at the refrigerant line (406) upstream of the third evaporator (402). The third metering device (404) is configured to control flow of the refrigerant into the third evaporator (402).

The air conditioning system (400) includes the first and second shut-off valves (112, 114) installed at the refrigerant inlet and outlet of the first evaporator (108) to prevent undesired collection of the refrigerant in the first evaporator (108). In some embodiments, the air conditioning system (400) further includes the third and fourth shut-off valves, such as those (302, 304) illustrated in FIG. 3, installed at the refrigerant inlet and outlet of the second evaporator (110) to prevent undesired collection of the refrigerant in the second evaporator (110). In some embodiments, the air conditioning system (400) further includes another pair of shut-off valves installed at the refrigerant inlet and outlet of the third evaporator (402) to prevent undesired collection of the refrigerant in the third evaporator (402).

In some embodiments, an air conditioning system of the present invention is electrically, fluidly, thermally or mechanically coupled with other components, devices or systems. For example, an air conditioning system (e.g., 100, 200, 300, or 400) of the present invention is combined with a heating system to form a combined heating and cooling air conditioning system. The combination of an air conditioning system with a heating system can be achieved in a similar way as those described in U.S. Patent No. 8,517,087.

As another example, an air conditioning system (e.g., 100, 200, 300, or 400) of the present invention is coupled to a vehicle ventilation module to provide conditioned fresh air to the desired compartment(s). The vehicle ventilation module can be the same as or similar to those described in U.S. Publication No. 2014/0262132.

The terminology used herein is for the purpose of describing particular implementations only and is not intended to be limiting of the claims. As used in the description of the implementations and the appended claims, the singular forms "a", "an" and "the" are intended to include the plural forms as well, unless the context clearly indicates otherwise. It will be understood that, although the terms "first," "second," etc. may be used herein to describe various elements, these elements should not be limited by these terms. These terms are only used to distinguish one element from another. For example, a first evaporator could be termed a second evaporator, and, similarly, a second evaporator could be termed a first evaporator, without changing the meaning of the description, so long as all occurrences of the "first evaporator" are renamed consistently and all occurrences of the "second evaporator" are renamed consistently.

## Claims

1. An air conditioning system for use in a vehicle having two or more compartments, the air conditioning system comprising:
a plurality of compressors for compressing a refrigerant into a compressed refrigerant, wherein the plurality of compressors includes
a first compressor (102) configured to connect to an internal combustion engine of the vehicle and driven by the internal combustion engine when the internal combustion engine is running; and
a second compressor (104) configured to operate when the internal combustion engine of the vehicle is not running, wherein the first and second compressors (102, 104) are fluidly coupled to each other in parallel;
a condenser (106) disposed downstream of the plurality of compressors for condensing the compressed refrigerant;
a plurality of evaporators disposed downstream of the condenser (106) for evaporating the condensed refrigerant, the plurality of evaporators including a first evaporator (108) and a second evaporator (110), wherein:
the first evaporator (108) and the second evaporator (110) are fluidly coupled to each other in parallel;
the first evaporator (108) is in thermal communication with a first compartment in the two or more compartments of the vehicle to cool the first compartment; and
the second evaporator (110) is in thermal communication with a second compartment in the two or more compartments of the vehicle to cool the second compartment;
a plurality of shut-off valves including a first shut-off valve (112) and a second shut-off valve (114), wherein the first shut-off valve (112) is installed at a refrigerant inlet of the first evaporator (108) and the second shut-off valve (112) is installed at a refrigerant outlet of the first evaporator (108) to prevent refrigerant from collecting in the first evaporator (108);
refrigerant lines (140) fluidly connecting the plurality of compressors, the condenser (106), and the plurality of evaporators to form a refrigerant circuit (138) for circulating the refrigerant;
a first sensor (128) configured to perform one or more of the following: (i) measure temperature of the first evaporator and (ii) measure airflow passing over the first evaporator; and
a controller (132) electrically coupled to the first sensor and configured to, during operation:
automatically close the first and second shut-off valves (112, 114) when the measured temperature of the first evaporator (108) is lower than a first predetermined temperature, or when the measured airflow passing over the first evaporator (108) is less than a first predetermined volume, and
automatically open the first and second shut-off valves (112, 114) when the measured temperature of the first evaporator (108) exceeds the first predetermined temperature, or when the measured airflow passing over the first evaporator (108) is equal to or greater than the first predetermined volume,
wherein the controller (132)
- is electrically coupled to the first compressor (102) and configured to automatically control the operation of the first compressor (102) in accordance with the operation of the engine such that the first compressor in configured to operate when the internal combustion engine (134) is running; and
- is electrically coupled to the second compressor (104) and configured to automatically control the operation of the second compressor (104) in accordance with the operation of the engine such that the second compressor is configured to operate when the internal combustion engine is not running.

2. The air conditioning system of claim 1, wherein the controller (132) is electrically coupled to the plurality of compressors and configured to automatically control operation of the plurality of compressors in accordance with cooling demand of the two or more compartments of the vehicle.

3. The air conditioning system of any one of claims 1-2, wherein the first evaporator (108) is mounted in the first compartment of the vehicle, wherein the first compartment is a cab compartment or a sleeper compartment.

4. The air conditioning system of claim 1, further comprising:
a first flow control valve (129) disposed upstream of the first compressor (102) and configured to selectively restrict or permit flow of the refrigerant to the first compressor (102); and
a second flow control valve (130) disposed upstream of the second compressor (104) and configured to selectively restrict or permit flow of the refrigerant to the second compressor (104).

5. The air conditioning system of any one of claims 1-2, further comprising:
at least one flow control valve (129) disposed upstream of the plurality of compressors and configured to selectively restrict or permit flow of the refrigerant to the plurality of compressors.

6. The air conditioning system of any one of claims 1-2, further comprising:
a first metering device (116) disposed between the first shut off valve (112) and the first evaporator (108) and configured for controlling flow rate of the refrigerant into the first evaporator (108); and
a second metering device (118) disposed upstream of the second evaporator (110) and configured for controlling flow rate of the refrigerant into the second evaporator (110).

7. The air conditioning system of any one of claims 1-2, further comprising a receiver/drier (120) disposed between the condenser (106) and the plurality of evaporators (108, 110) and configured for performing one or more of the following: temporarily storing the refrigerant and absorbing moisture from the refrigerant.

8. The air conditioning system of any one of claims 1-2, wherein the plurality of shut-off valves include a third shut-off valve (302) and a fourth shut-off valve (304), wherein the third shut-off valve (302) is installed at a refrigerant inlet of the second evaporator (110) and the fourth shut-off valve (304) is installed at a refrigerant outlet of the second evaporator (110) to prevent refrigerant from collecting in the second evaporator (110).

9. The air conditioning system of claim 8, further comprising:
a second sensor (306) configured to perform one or more of the following: (i) measure temperature of the second evaporator (110) and (ii) measure airflow passing over the second evaporator (11O); and wherein the controller (132) is electrically coupled to the second sensor and configured to, during operation:
automatically close the third and fourth shut-off valves (302, 304) when the measured temperature of the second evaporator (110) is lower than a second predetermined temperature, or when the measured airflow passing over the second evaporator (110) is less than a second predetermined volume, and
automatically open the third and fourth shut-off valves (302, 304) when the measured temperature of the second evaporator (110) exceeds the second predetermined temperature, or when the measured airflow passing over the second evaporator (110) is equal to or greater than the second predetermined volume.

10. The air conditioning system of any one of claims 1-2, further comprising:
a first air blower (122) positioned proximate the first evaporator (108) and configured to blow air over the first evaporator (108);
a second air blower (124) positioned proximate the second evaporator (110) and configured to blow air over the second evaporator (110), and
a third air blower (126) positioned proximate the condenser (106) and con- figured to blow air over the condenser (106).

## Patentansprüche

1. Klimaanlage zur Verwendung in einem Fahrzeug mit zwei oder mehr Innenräumen, wobei die Klimaanlage folgendes umfasst:
eine Vielzahl von Kompressoren zum Verdichten eines Kältemittels in ein komprimiertes Kältemittel, wobei die Vielzahl von Kompressoren Folgendes umfasst:
einen ersten Kompressor (102), der so konfiguriert ist, dass er mit einem Verbrennungsmotor des Fahrzeugs verbunden ist und von dem Verbrennungsmotor angetrieben wird, wenn der Verbrennungsmotor in Betrieb ist; und
einen zweiten Kompressor (104), der so konfiguriert ist, dass er arbeitet, wenn der Verbrennungsmotor des Fahrzeugs nicht in Betrieb ist, wobei die ersten und zweiten Kompressoren (102, 104) parallel zueinander fluidisch gekoppelt sind;
einen Verflüssiger (106), der stromabwärts von der Vielzahl von Kompressoren angeordnet ist, um das verdichtete Kältemittel zu kondensieren;
eine Vielzahl von Verdampfern, die stromabwärts des Verflüssigers (106) angeordnet sind, um das kondensierte Kältemittel zu verdampfen, wobei die Vielzahl von Verdampfern einen ersten Verdampfer (108) und einen zweiten Verdampfer (110) einschließt, wobei:
der erste Verdampfer (108) und der zweite Verdampfer (110) parallel zueinander fluidisch gekoppelt sind;
der erste Verdampfer (108) in thermischer Verbindung mit einem ersten Innenraum in den zwei oder mehr Innenräumen des Fahrzeugs steht, um den ersten Innenraum zu kühlen; und
der zweite Verdampfer (110) in thermischer Verbindung mit einem zweiten Innenraum in den zwei oder mehr Innenräumen des Fahrzeugs steht, um den zweiten Innenraum zu kühlen;
eine Vielzahl von Absperrventilen einschließlich eines ersten Absperrventils (112) und eines zweiten Absperrventils (114), wobei das erste Absperrventil (112) an einem Kältemitteleinlass des ersten Verdampfers (108) installiert ist und das zweite Absperrventil (112) an einem Kältemittelauslass des ersten Verdampfers (108) installiert ist, um zu verhindern, dass sich Kältemittel in dem ersten Verdampfer (108) sammelt;
Kältemittelleitungen (140), die die Vielzahl von Kompressoren, den Verflüssiger (106) und die Vielzahl von Verdampfern miteinander verbinden, um einen Kältemittelkreislauf (138) zum Zirkulieren des Kältemittels zu bilden;
einen ersten Sensor (128), der so konfiguriert ist, dass er eines oder mehreres von Folgendem ausführt: (i) Messen einer Temperatur des ersten Verdampfers und (ii) Messen eines Luftstroms, der über den ersten Verdampfer strömt; und
einen Regler (132), der elektrisch mit dem ersten Sensor verbunden und so konfiguriert ist, dass er im Betrieb
die ersten und zweiten Absperrventile (112, 114) automatisch schließt, wenn die gemessene Temperatur des ersten Verdampfers (108) niedriger ist als eine erste vorbestimmte Temperatur, oder wenn der gemessene Luftstrom, der über den ersten Verdampfer (108) strömt, geringer ist als ein erstes vorbestimmtes Volumen, und
die ersten und zweiten Absperrventile (112, 114) automatisch öffnet, wenn die gemessene Temperatur des ersten Verdampfers (108) höher ist als die erste vorbestimmte Temperatur, oder wenn der gemessene Luftstrom, der über den ersten
Verdampfer (108) strömt, gleich oder größer ist als das erste vorbestimmte Volumen, wobei der Regler (132)
- elektrisch mit dem ersten Kompressor (102) gekoppelt ist und so konfiguriert ist, dass er den Betrieb des ersten Kompressors (102) in Übereinstimmung mit dem Betrieb des Motors automatisch steuert, so dass der erste Kompressor so konfiguriert ist, dass er arbeitet, wenn der Verbrennungsmotor (134) in Betrieb ist; und
- elektrisch mit dem zweiten Kompressor (104) gekoppelt und so konfiguriert ist, dass er den Betrieb des zweiten Kompressors (104) in Übereinstimmung mit dem Betrieb des Motors automatisch steuert, so dass der zweite Kompressor so konfiguriert ist, dass er arbeitet, wenn der Verbrennungsmotor nicht in Betrieb ist.

2. Klimaanlage nach Anspruch 1, wobei der Regler (132) elektrisch mit der Vielzahl von Kompressoren gekoppelt und so konfiguriert ist, dass er den Betrieb der Vielzahl von Kompressoren in Übereinstimmung mit dem Kühlbedarf der zwei oder mehr Innenräume des Fahrzeugs automatisch steuert.

3. Klimaanlage nach einem der Ansprüche 1 bis 2, wobei der erste Verdampfer (108) in dem ersten Innenraum des Fahrzeugs eingebaut ist, wobei der erste Innenraum ein Führerhaus-Innenraum oder ein Schlaf-Innenraum ist.

4. Klimaanlage nach Anspruch 1, ferner Folgendes umfassend:
ein erstes Strömungsregelventil (129), das stromaufwärts des ersten Kompressors (102) angeordnet und so konfiguriert ist, dass es den Strom des Kältemittels zu dem ersten Kompressor (102) selektiv beschränkt oder zulässt; und
ein zweites Strömungsregelventil (130), das stromaufwärts des zweiten Kompressors (104) angeordnet und so konfiguriert ist, dass es den Strom des Kältemittels zu dem zweiten Kompressor (104) selektiv beschränkt oder zulässt.

5. Klimaanlage nach einem der Ansprüche 1 bis 2, ferner Folgendes umfassend:
mindestens ein Strömungsregelventil (129), das stromaufwärts der Vielzahl von Kompressoren angeordnet und so konfiguriert ist, dass es den Strom des Kältemittels zu der Vielzahl von Kompressoren selektiv beschränkt oder zulässt.

6. Klimaanlage nach einem der Ansprüche 1 bis 2, ferner Folgendes umfassend:
eine erste Messvorrichtung (116), die zwischen dem ersten Absperrventil (112) und dem ersten Verdampfer (108) angeordnet ist und die konfiguriert ist zum Steuern der Durchflussmenge des Kältemittels in den ersten Verdampfer (108); und
eine zweite Messvorrichtung (118), die stromaufwärts des zweiten Verdampfers (110) angeordnet ist und die konfiguriert ist zum Steuern der Durchflussmenge des Kältemittels in den zweiten Verdampfer (110).

7. Klimaanlage nach einem der Ansprüche 1 bis 2, ferner umfassend einen Aufnehmer/Trockner (120), der zwischen dem Kondensator (106) und der Vielzahl von Verdampfern (108, 110) angeordnet ist, und der so konfiguriert ist, dass er ein vorübergehendes Speichern des Kältemittels und/oder ein Absorbieren von Feuchtigkeit aus dem Kältemittel ausführt.

8. Klimaanlage nach einem der Ansprüche 1 bis 2, wobei die Vielzahl von Absperrventilen ein drittes Absperrventil (302) und ein viertes Absperrventil (304) einschließt, wobei das dritte Absperrventil (302) an einem Kältemitteleinlass des zweiten Verdampfers (110) installiert ist und das vierte Absperrventil (304) an einem Kältemittelauslass des zweiten Verdampfers (110) installiert ist, um zu verhindern, dass sich Kältemittel in dem zweiten Verdampfer (110) sammelt.

9. Klimaanlage nach Anspruch 8, ferner Folgendes umfassend:
einen zweiten Sensor (306), der so konfiguriert ist, dass er eines oder mehreres von Folgendem durchführt: (i) Messen der Temperatur des zweiten Verdampfers (110) und (ii) Messen des über den zweiten Verdampfer (110) strömenden Luftstroms; und wobei der Regler (132) mit dem zweiten Sensor elektrisch gekoppelt und so konfiguriert ist, dass er während des Betriebs
das dritte und vierte Absperrventil (302, 304) automatisch schließt, wenn die gemessene Temperatur des zweiten Verdampfers (110) niedriger ist als eine zweite vorbestimmte Temperatur oder wenn der gemessene Luftstrom, der über den zweiten Verdampfer (110) strömt, geringer ist als ein zweites vorbestimmtes Volumen, und
das dritte und vierte Absperrventil (302, 304) automatisch öffnet, wenn die gemessene Temperatur des zweiten Verdampfers (110) die zweite vorbestimmte Temperatur überschreitet oder wenn der gemessene Luftstrom, der über den zweiten Verdampfer (110) strömt, gleich oder größer ist als das zweite vorbestimmte Volumen.

10. Klimaanlage nach einem der Ansprüche 1 bis 2, ferner Folgendes umfassend:
ein erstes Luftgebläse (122), das in der Nähe des ersten Verdampfers (108) angeordnet und so konfiguriert ist, dass es Luft über den ersten Verdampfer (108) bläst;
ein zweites Luftgebläse (124), das in der Nähe des zweiten Verdampfers (110) angeordnet und so konfiguriert ist, dass es Luft über den zweiten Verdampfer (110) bläst, und
ein drittes Luftgebläse (126), das in der Nähe des Verflüssigers (106) angeordnet und so konfiguriert ist, dass es Luft über den Verflüssiger (106) bläst.

## Revendications

1. Système de climatisation destiné à être utilisé dans un véhicule ayant deux ou plusieurs compartiments, le système de climatisation comprenant :
une pluralité de compresseurs pour comprimer un réfrigérant en un réfrigérant comprimé,
dans lequel la pluralité de compresseurs comporte
un premier compresseur (102) configuré pour être raccordé à un moteur à combustion interne du véhicule et entraîné par le moteur à combustion interne lorsque le moteur à combustion interne tourne ; et
un deuxième compresseur (104) configuré pour fonctionner lorsque le moteur à combustion interne du véhicule ne tourne pas, dans lequel les premier et deuxième compresseurs (102, 104) sont couplés de manière fluidique l'un à l'autre en parallèle ;
un condenseur (106) disposé en aval de la pluralité de compresseurs pour condenser le réfrigérant comprimé ;
une pluralité d'évaporateurs disposés en aval du condenseur (106) pour évaporer le réfrigérant condensé, la pluralité d'évaporateurs comportant un premier évaporateur (108) et un deuxième évaporateur (110), dans lequel :
le premier évaporateur (108) et le deuxième évaporateur (110) sont couplés de manière fluidique l'un à l'autre en parallèle ;
le premier évaporateur (108) est en communication thermique avec un premier compartiment dans les deux ou plusieurs compartiments du véhicule pour refroidir le premier compartiment ; et
le deuxième évaporateur (110) est en communication thermique avec un deuxième compartiment dans les deux ou plusieurs compartiments du véhicule pour refroidir le deuxième compartiment ;
une pluralité de soupapes d'arrêt comportant une première soupape d'arrêt (112) et une deuxième soupape d'arrêt (114), dans lequel la première soupape d'arrêt (112) est installée au niveau d'une entrée de réfrigérant du premier évaporateur (108) et la deuxième soupape d'arrêt (112) est installée au niveau d'une sortie de réfrigérant du premier évaporateur (108) pour empêcher le réfrigérant de s'accumuler dans le premier évaporateur (108) ;
des conduites de réfrigérant (140) raccordant de manière fluidique la pluralité de compresseurs, le condenseur (106) et la pluralité d'évaporateurs pour former un circuit de réfrigérant (138) pour faire circuler le réfrigérant ;
un premier capteur (128) configuré pour effectuer une ou plusieurs des opérations suivantes : (i) mesurer la température du premier évaporateur et (ii) mesurer le flux d'air passant sur le premier évaporateur ; et
un dispositif de commande (132) couplé électriquement au premier capteur et configuré pour, pendant le fonctionnement :
fermer automatiquement les première et deuxième soupapes d'arrêt (112, 114) lorsque la température mesurée du premier évaporateur (108) est inférieure à une première température prédéterminée, ou lorsque le flux d'air mesuré passant sur le premier évaporateur (108) est inférieur à un premier volume prédéterminé, et
ouvrir automatiquement les première et deuxième soupapes d' arrêt (112, 114) lorsque la température mesurée du premier évaporateur (108) est supérieure à la première température prédéterminée, ou lorsque le flux d'air mesuré passant sur le premier évaporateur (108) est égal ou supérieur au premier volume prédéterminé,
dans lequel le dispositif de commande (132)
- est couplé électriquement au premier compresseur (102) et configuré pour commander automatiquement le fonctionnement du premier compresseur (102) conformément au fonctionnement du moteur de telle sorte que le premier compresseur est configuré pour fonctionner lorsque le moteur à combustion interne (134) tourne ; et
- est couplé électriquement au deuxième compresseur (104) et configuré pour commander automatiquement le fonctionnement du deuxième compresseur (104) conformément au fonctionnement du moteur de telle sorte que le deuxième compresseur est configuré pour fonctionner lorsque le moteur à combustion interne ne tourne pas.

2. Système de climatisation selon la revendication 1, dans lequel le dispositif de commande (132) est couplé électriquement à la pluralité de compresseurs et configuré pour commander automatiquement le fonctionnement de la pluralité de compresseurs conformément à la demande de refroidissement des deux ou plusieurs compartiments du véhicule.

3. Système de climatisation selon l'une quelconque des revendications 1-2, dans lequel le premier évaporateur (108) est monté dans le premier compartiment du véhicule, dans lequel le premier compartiment est un compartiment de cabine ou un compartiment de couchage.

4. Système de climatisation selon la revendication 1, comprenant en outre :
une première vanne de régulation de débit (129) disposée en amont du premier compresseur (102) et configurée pour sélectivement restreindre ou permettre l'écoulement du réfrigérant vers le premier compresseur (102) ; et
une deuxième vanne de régulation de débit (130) disposée en amont du deuxième compresseur (104) et configurée pour sélectivement restreindre ou permettre l'écoulement du réfrigérant vers le deuxième compresseur (104).

5. Système de climatisation selon l'une quelconque des revendications 1-2, comprenant en outre :
au moins une vanne de régulation de débit (129) disposée en amont de la pluralité de compresseurs et configurée pour sélectivement restreindre ou permettre l'écoulement du réfrigérant vers la pluralité de compresseurs.

6. Système de climatisation selon l'une quelconque des revendications 1-2, comprenant en outre :
un premier dispositif de mesure (116) disposé entre la première soupape d'arrêt (112) et le premier évaporateur (108) et configuré pour commander le débit du réfrigérant dans le premier évaporateur (108) ; et
un deuxième dispositif de mesure (118) disposé en amont du deuxième évaporateur (110) et configuré pour commander le débit du réfrigérant dans le deuxième évaporateur (110).

7. Système de climatisation selon l'une quelconque des revendications 1-2, comprenant en outre un récepteur/sécheur (120) disposé entre le condenseur (106) et la pluralité d'évaporateurs (108, 110) et configuré pour effectuer une ou plusieurs des opérations suivantes : stocker temporairement le réfrigérant et absorber l'humidité du réfrigérant.

8. Système de climatisation selon l'une quelconque des revendications 1-2, dans lequel la pluralité de soupapes d'arrêt comporte une troisième soupape d'arrêt (302) et une quatrième soupape d'arrêt (304), dans lequel la troisième soupape d'arrêt (302) est installée au niveau d'une entrée de réfrigérant du deuxième évaporateur (110) et la quatrième soupape d'arrêt (304) est installée au niveau d'une sortie de réfrigérant du deuxième évaporateur (110) pour empêcher le réfrigérant de s'accumuler dans le deuxième évaporateur (110).

9. Système de climatisation selon la revendication 8, comprenant en outre :
un deuxième capteur (306) configuré pour effectuer une ou plusieurs des opérations suivantes : (i) mesurer la température du deuxième évaporateur (110) et (ii) mesurer le flux d'air passant sur le deuxième évaporateur (110) ; et dans lequel le dispositif de commande (132) est couplé électriquement au deuxième capteur et configuré pour, pendant le fonctionnement :
fermer automatiquement les troisième et quatrième soupapes d'arrêt (302, 304) lorsque la température mesurée du deuxième évaporateur (110) est inférieure à une deuxième température prédéterminée, ou lorsque le flux d'air mesuré passant sur le deuxième évaporateur (110) est inférieur à un deuxième volume prédéterminé, et
ouvrir automatiquement les troisième et quatrième soupapes d'arrêt (302, 304) lorsque la température mesurée du deuxième évaporateur (110) est supérieure à la deuxième température prédéterminée, ou lorsque le flux d'air mesuré passant sur le deuxième évaporateur (110) est égal ou supérieur au deuxième volume prédéterminé.

10. Système de climatisation selon l'une quelconque des revendications 1-2, comprenant en outre :
une première soufflante d'air (122) positionnée à proximité du premier évaporateur (108) et configurée pour souffler de l'air sur le premier évaporateur (108) ;
une deuxième soufflante d'air (124) positionnée à proximité du deuxième évaporateur (110) et configurée pour souffler de l'air sur le deuxième évaporateur (110), et
une troisième soufflante d'air (126) positionnée à proximité du condenseur (106) et configurée pour souffler de l'air sur le condenseur (106).
